# FASCICULE DE BREVET EUROPEEN

(11) **EP 2 915 092 B1**
(45) Date de publication et mention de la délivrance du brevet: **19.10.2016**
(21) Numéro de dépôt: 13780365.6
(22) Date de dépôt: 24.10.2013
(51) Int. Cl.: G06K 7/01, H04M 1/21, G06K 7/00

(54) **DISPOSITIF SUPPORT D'AU MOINS UN MODULE DE COMMUNICATION**
UNTERSTÜTZUNGSVORRICHTUNG FÜR MINDESTENS EIN KOMMUNIKATIONSMODUL
SUPPORT DEVICE FOR AT LEAST ONE COMMUNICATION MODULE

(30) Priorité: 31.10.2012 FR 1260440
(43) Date de publication de la demande: 09.09.2015
(73) Titulaire: Ingenico Group, 75015 Paris (FR)
(72) Inventeur: SARRADIN, Jean-Louis, F-07300 Etables (FR); BODIN, Renan, F-69003 Lyon (FR); BAPTISTE, Régis, F-95270 Viarmes (FR); CAZOU, Dominique, F-33127 Saint Jean D'Illac (FR)
(74) Mandataire: Vidon Brevets & Stratégie
(86) Numéro de dépôt international: PCT/EP2013/072334
(87) Numéro de publication internationale: WO 2014/067854

(56) Documents cités:
- EP-A1- 2 360 987
- WO-A1-2012/129193
- FR-A1- 2 914 800
- US-A- 6 164 531
- US-A1- 2012 256 732

## Description

### 1. Domaine de l'invention

Le domaine de l'invention est celui des modules de communication, plus particulièrement des modules lecteur de carte (carte sans contact, carte à puce, ou encore carte à piste magnétique, ...), destinés à être reliés électriquement et mécaniquement à un terminal de communication, par exemple un smartphone ou une tablette.

### 2. Art antérieur

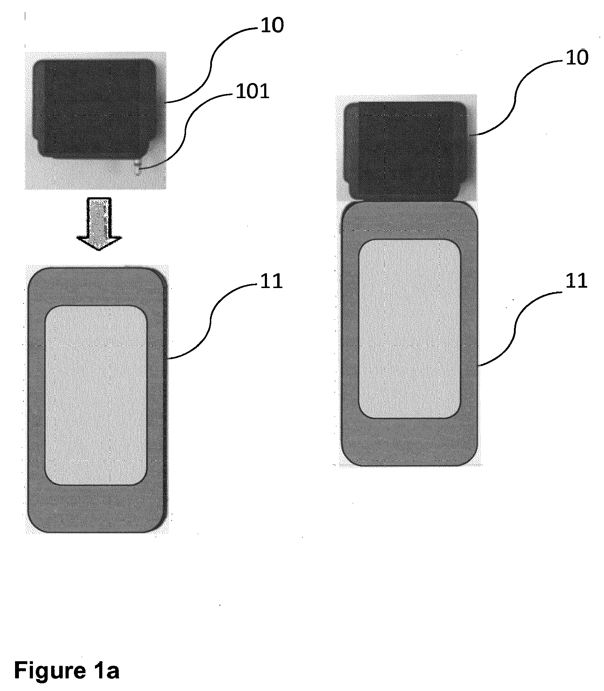

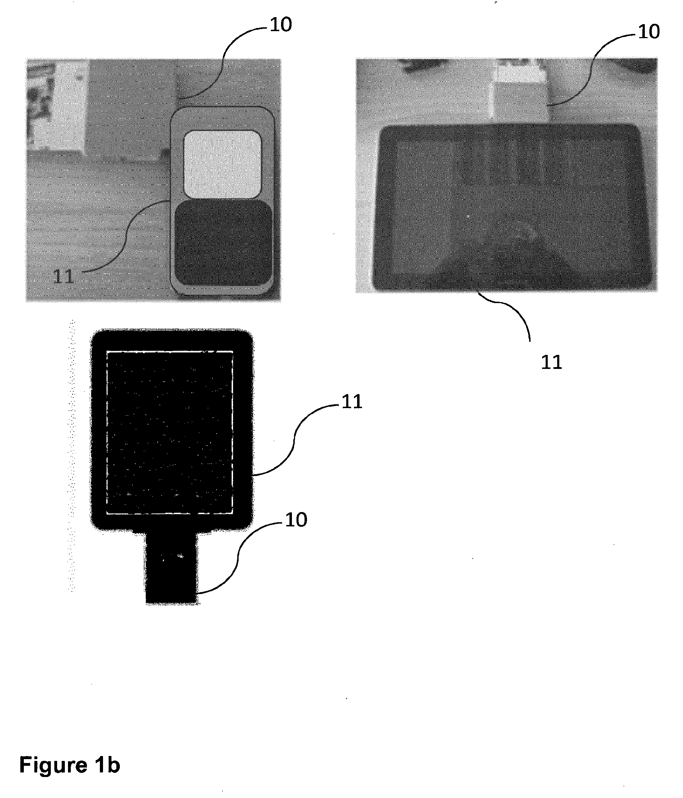

Il existe à ce jour de tels modules 10 lecteurs de carte, reliés électriquement et mécaniquement au terminal de communication 11 via le connecteur « jack » audio 101, tel qu'illustré sur les figures 1a et 1b.

Sur de tels produits, le connecteur « jack » audio 101 réalise donc les deux fonctions de connexion électrique et de fixation mécanique.

Les inconvénients de tels produits sont :
- d'une part, la fragilité de la fixation mécanique, le connecteur jack audio ne présentant pas une grande résistance à des contraintes exercées par exemple sur le module lecteur,
- d'autre part, une forte contrainte sur l'ergonomie du module et du terminal de communication, due à la dépendance du positionnement du module imposée par l'emplacement du jack audio sur le terminal (en haut, en bas, sur le côté, ... comme illustré en figure 1b).

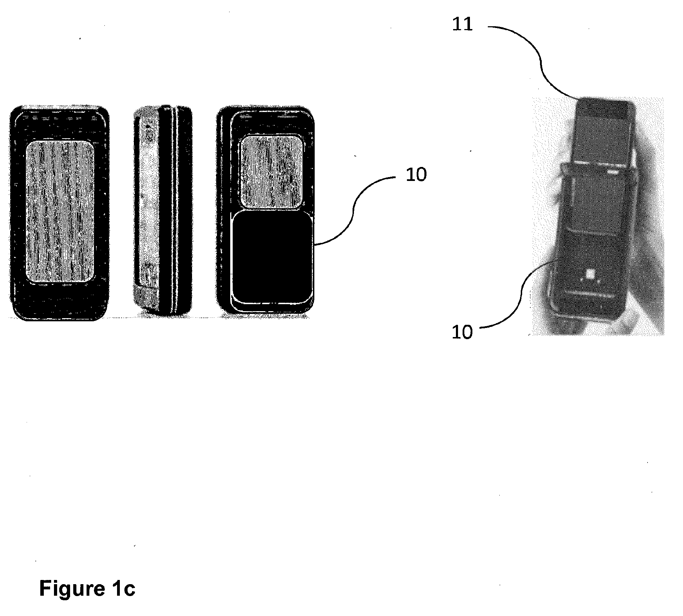

Il existe également un autre type de module lecteur, illustré en figure 1c, disposant d'un emplacement mécanique spécifique destiné à recevoir le terminal de communication 11 auquel il est relié.

Le principal inconvénient d'un tel produit est qu'il n'est mécaniquement compatible qu'avec un seul terminal de communication, et doit donc être adapté pour chaque type de terminal.

On connaît également le document de brevet FR 2 914 800, se rapportant à un module NFC, notamment pour un téléphone mobile, pouvant être positionné, via un support, sur un module fonctionnel, lequel peut être fixé sur le téléphone au moyen d'un matériau adhésif. Le principal inconvénient d'une telle solution réside dans le caractéristique définitif de la fixation du module sur le téléphone mobile.

### 3. Objectifs de l'invention

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant de relier un module lecteur de cartes à une pluralité de produits hétérogènes tels que des smartphones de tout type, des tablettes de tout type, ... .

Un autre objectif de l'invention, dans au moins un mode de réalisation, est de fournir une technique permettant une fixation mécanique optimale du module lecteur au terminal de communication.

### 4. Exposé de l'invention

L'invention concerne un dispositif support d'au moins un module de communication, selon la revendication 1.

En particulier, le dispositif support comprend :
- des moyens de maintien, de manière amovible, sur le dispositif support, du module de communication destiné à communiquer avec un terminal de communication ;
- des moyens de fixation, de manière repositionnable, du dispositif support au terminal de communication,
et le dispositif support étant composé d'au moins deux parties articulées, au moins une des parties articulées présentant lesdits moyens de fixation, permettant au dispositif support de prendre au moins les positions suivantes :
- position de fixation, dans laquelle les deux parties articulées sont aptes à fixer le dispositif support au terminal de communication ;
- position d'inutilisation, dans laquelle les deux parties articulées sont repliées l'une sur l'autre ;
- position de présentation du module de communication, dans laquelle les deux parties articulées forment un angle aigu.

Ainsi, l'invention repose sur une approche nouvelle et inventive de la fixation mécanique d'un module de communication, par exemple un module lecteur de carte (ci-après noté module lecteur), à un terminal de communication avec lequel il communique, permettant non seulement une fixation efficace du module lecteur au terminal de communication mais également une ergonomie optimisée. De plus, l'invention, selon ses différents modes de réalisation, permet de relier mécaniquement un module lecteur à n'importe quel type de terminal de communication.

Ainsi, l'invention, selon différents modes de réalisation particuliers, met en oeuvre un dispositif support permettant à la fois de maintenir le module lecteur, de manière amovible, et de fixer le module lecteur au terminal de communication, de manière repositionnable.

Pour ce faire, le dispositif support présente à la fois des moyens de maintien du module lecteur, par exemple sous la forme d'une glissière dans laquelle peut s'insérer le module lecteur, et des moyens de fixation du dispositif support au terminal de communication, par exemple sous la forme de moyens permettant une fixation repositionnable (gel adhésif par exemple).

Ainsi, contrairement aux techniques de l'art antérieur, le module lecteur peut être désolidarisé du dispositif support, qui lui-même peut être positionné une multitude de fois sur n'importe quel type de terminal de communication.

Selon un aspect particulier de l'invention, les moyens de fixation sont mis en oeuvre par du gel adhésif sur au moins une portion d'une face du dispositif support.

Ainsi, selon ce mode de réalisation particulier de l'invention, du gel adhésif est utilisé pour former les moyens de fixation du dispositif support sur le terminal de communication, tirant ainsi habilement partie des propriétés du gel adhésif qui permettent une fixation efficace ainsi qu'un usage répété.

De cette manière, pour solidariser mécaniquement le dispositif support et le terminal de communication, il suffit d'appuyer le dispositif support sur le terminal de communication comme on le ferait avec une ventouse. Pour désolidariser les deux éléments, il suffit de tirer le dispositif support en sens inverse.

Le gel adhésif utilisé permet un usage répété autorisant par exemple un utilisateur à placer le module lecteur, via le dispositif support, sur le produit lorsqu'il a besoin de lire une carte et à l'enlever lorsqu'il n'en a plus l'usage.

Ainsi, le module lecteur peut être mécaniquement associé, via le dispositif support, à différents produits, tout en choisissant la position du module lecteur par rapport au produit auquel il est associé de façon à optimiser l'ergonomie de l'ensemble.

Par exemple, du gel adhésif est positionné sur une face du dispositif support sous la forme d'un ou plusieurs « points » de gel adhésif, selon la forme du dispositif support par exemple.

Enfin, le gel adhésif offre la particularité, lorsqu'il est encrassé et que son adhésivité diminue, de retrouver son pouvoir adhésif après nettoyage à l'eau. Cela permet donc un usage intensif et répété sans contrainte.

De plus, selon ce mode de réalisation particulier de l'invention, le dispositif support est composé de deux parties articulées, permettant notamment le repli du dispositif support pour son rangement, optimisant ainsi la place occupée, ainsi que l'utilisation du dispositif support pour stocker/présenter le module lecteur, par exemple sur un bureau.

Par exemple, selon ce mode de réalisation, les deux parties articulées du dispositif support peuvent se replier l'une sur l'autre (à la manière d'un poudrier), permettant ainsi de placer le module lecteur dans une poche sans que le gel adhésif, dont est pourvue au moins l'une des deux parties articulées, entre en contact avec une autre matière.

De plus, ces deux parties, lorsqu'elles sont « alignées », forment une face de fixation plane du dispositif support permettant sa fixation au terminal de communication. Si les deux parties présentent des moyens de fixation, par exemple sous la forme de gel adhésif, la fixation du dispositif support au terminal est également renforcée grâce à ces deux parties.

Par ailleurs, dans cette position de fixation, ce mode de réalisation de l'invention tire partie de l'articulation entre les deux parties pour permettre une fixation du module lecteur à un terminal de communication ne présentant pas une surface plane, comme par exemple la face arrière d'une tablette. Dans ce cas, les deux parties ne sont pas tout à fait alignées et leur articulation permet de s'adapter à la forme du terminal de communication.

Enfin, l'articulation de ces deux parties du dispositif support, ainsi que la présence des moyens de fixation sur la partie « inférieure », permet également d'utiliser le support, dans une position particulière, pour stocker/positionner le module lecteur, par exemple sur un comptoir d'un commerçant, ou sur un bureau, de façon à pouvoir y accéder rapidement. Ainsi, la partie inférieure est fixée au bureau, par exemple via du gel adhésif, alors que la partie supérieure est apte à présenter les moyens de maintien du module lecteur.

Ainsi, si le module lecteur communique par une liaison sans fil avec le terminal de communication, le module lecteur peut être utilisé dans cette position de présentation par un commerçant par exemple.

Selon un mode de réalisation particulier, les parties articulées présentent chacune des moyens de fixation, disposés en quinconce, de manière à ne pas entrer en contact dans la position d'inutilisation.

Ainsi, selon ce mode de réalisation particulier de l'invention, les deux parties articulées du dispositif support sont pourvues de moyens de fixation, par exemple sous la forme de gel adhésif, lequel est judicieusement positionné sur chacune des deux parties de façon à ne pas entrer en contact lorsque les deux parties sont repliées l'une sur l'autre.

Par exemple, un point de gel adhésif est positionné au milieu de l'une des parties alors que sur l'autre, deux points de gel adhésif sont positionnés sur les côtés.

De plus, on peut prévoir, sur chacune des deux parties articulées, et en regard des différents points de gel adhésif respectifs (lorsque les deux parties sont repliées l'une sur l'autre), des creux environ de l'épaisseur du gel adhésif permettant une meilleure « fermeture » du dispositif support et un gain de place lorsqu'il est replié.

Selon un aspect particulier de l'invention, les moyens de maintien du module de communication présentent une forme de glissière permettant l'insertion et le retrait du module de communication du dispositif support par glissement du module relativement au dispositif support.

Ainsi, selon ce mode de réalisation particulier de l'invention, le dispositif support présente une glissière, dans laquelle une partie du module lecteur peut s'insérer, afin d'en assurer le bon maintien, tout en permettant également le retrait du module lecteur, par exemple pour le rangement du dispositif support lorsque le module lecteur n'est pas utilisé, ou également lorsqu'il faut remplacer le module lecteur ou le dispositif support.

De cette manière, une utilisation autonome du module lecteur est possible.

Selon une caractéristique particulière de l'invention, les moyens de maintien du module de communication sont mis en oeuvre selon la même forme que les moyens de fixation du dispositif support.

Ainsi, selon ce mode de réalisation particulier de l'invention, le module lecteur est maintenu sur le dispositif support par les mêmes moyens de fixation que ceux utilisés pour fixer le dispositif support au terminal de communication, par exemple du gel adhésif.

Ainsi, selon une première variante, le dispositif support peut présenter, sur une de ces faces, au moins deux points de gel adhésif, l'un permettant de maintenir le module lecteur, et l'autre permettant de fixer le dispositif support au terminal de communication.

Selon une deuxième variante, le dispositif support peut présenter deux parties distinctes permettant respectivement de maintenir le module lecteur par un ou plusieurs points de gel adhésif sur cette première partie, et de fixer le dispositif support au terminal de communication également par un ou plusieurs points de gel adhésif sur cette deuxième partie.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1a à 1c, déjà décrites en relation avec l'art antérieur, présentent des exemples de liaison mécanique d'un module lecteur avec un terminal de communication, selon des techniques de l'art antérieur ;
- La figure 2a présente un exemple non conforme à l'invention ;
- la figure 2b présente un exemple de dispositif support selon un mode de réalisation particulier de l'invention ;
- les figures 3a et 3b présentent plusieurs exemples d'assemblage d'un module lecteur avec un terminal de communication, via un dispositif support selon un mode de réalisation particulier de l'invention ;
- les figures 4a et 4b présentent deux exemples d'utilisation du dispositif support selon un mode de réalisation particulier de l'invention ;
- les figures 5 et 6 illustrent deux exemples de moyens de maintien du module lecteur sur le dispositif support selon deux modes de réalisation particuliers de l'invention.

### 6. Description d'un mode de réalisation de l'invention

### 6.1 Principe général

Le principe général de l'invention repose sur l'utilisation d'un dispositif support fournissant à la fois des moyens de maintien d'un module lecteur de carte, de manière amovible, et des moyens de fixation à un terminal de communication destiné à communiquer avec le module lecteur, permettant ainsi une fixation mécanique « universelle » d'un module lecteur à un terminal de communication, quelque soit le type de terminal (smartphone, tablette, ...).

Par ailleurs, les moyens de maintien du module lecteur permettent un retrait du module lecteur, pour une utilisation autonome, et les moyens de fixation sont prévus pour permettre un usage répété du dispositif support, grâce à l'utilisation de moyens repositionnables, tout en assurant une bonne fixation pour une utilisation optimale de l'assemblage module lecteur-terminal de communication.

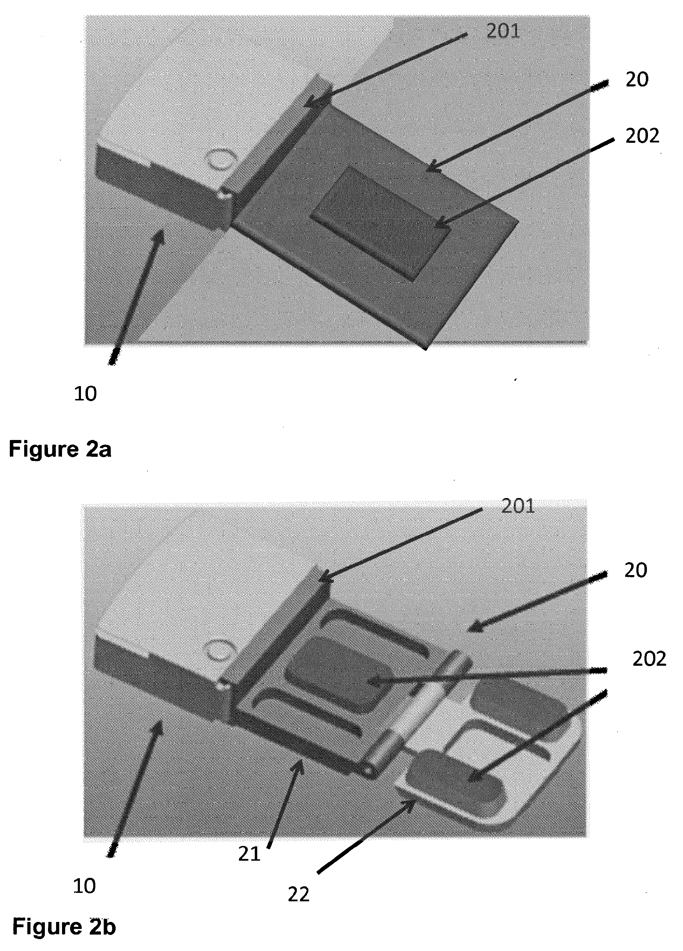

La figure 2a illustre des moyens de maintien 201 du module lecteur 10 et les moyens de fixation 202 du dispositif support 20 au terminal de communication sont des moyens distincts.

Ainsi, selon la figure 2a le dispositif support 20 comprend une partie portant des moyens de fixation 202 de celui-ci au terminal de communication et une partie formant les moyens de maintien 201 du module lecteur.

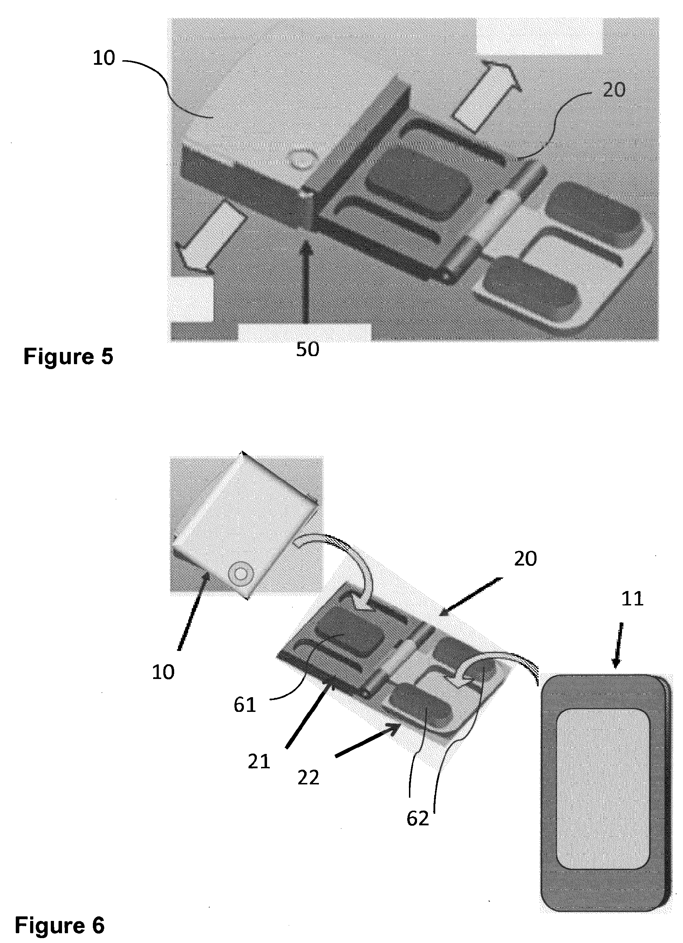

Par exemple, et comme illustré en figure 2a et 5, les moyens de maintien du module lecteur comprennent une glissière 201 (50), permettant l'insertion et le retrait du module lecteur du dispositif support par glissement du module lecteur relativement au dispositif support.

Le maintien du module lecteur est assuré de manière optimale par le système de glissière, tout en permettant un retrait du module lecteur, par exemple pour un usage autonome, ou encore lorsque le dispositif support est à remplacer (par exemple parce qu'il est endommagé).

Par ailleurs, les moyens de fixation 202 du dispositif support sur le terminal de communication consistent en une surface recouverte de gel adhésif, permettant de fixer le dispositif support au dos d'un terminal de communication, quelque soit son type, et de retirer le dispositif support, et ce de manière répétée.

En effet, le gel adhésif offre également la particularité de retrouver son pouvoir adhésif après nettoyage à l'eau, par exemple lorsqu'il est encrassé et que son adhésivité diminue. Cela permet donc un usage intensif et répété sans contrainte.

On rappelle ici que l'utilisation du gel adhésif présente de nombreux avantages, dont celui de permettre un usage répété et celui de permettre une bonne fixation. De plus, son utilisation est simple car il suffit, pour solidariser mécaniquement le dispositif support et le terminal de communication, d'appuyer le dispositif support sur le terminal de communication comme on le ferait avec une ventouse. Pour désolidariser les deux éléments, il suffit de tirer le dispositif support en sens inverse. En effet, le gel adhésif se comporte comme une multitude de petites ventouses et permet donc la fixation sur des produits de forme et de texture hétérogènes. De plus, ce type de gel ne laisse aucune trace sur le terminal de communication, une fois retiré, ce qui permet de l'utiliser sans crainte de détériorer, ou même de salir le terminal de communication.

Il est à noter que tout type de technique présentant les avantages du gel adhésif décrits ci-dessus peut être utilisé, selon différents modes de réalisation particuliers de l'invention, pour assurer les moyens de fixation du dispositif support au terminal de communication.

### 6.2 Premier mode de réalisation

Selon un premier mode de réalisation, illustré en figure 2b, le dispositif support 20 comprend une partie formant les moyens de maintien 201 du module lecteur, par exemple sous la même forme (glissière) que pour l'exemple de la figure 2a décrit ci-dessus, et une partie formée elle-même de deux sous-parties articulées 21 et 22 portant des moyens de fixation 202 du module lecteur au terminal de communication.

Ainsi, selon le premier mode de réalisation, il est possible de replier les parties articulées 21 et 22 sur elles-mêmes, de façon à refermer le dispositif support (à la manière d'un poudrier), par exemple lorsqu'il est inutilisé. De cette manière, les moyens de fixation, par exemple sous la forme de gel adhésif, ne sont pas en contact avec l'extérieur lorsque le dispositif support est rangé, par exemple dans une poche ou posé sur un bureau.

Avantageusement, lorsque chacune des deux parties 21 et 22 présentent des moyens de fixation 202, comme illustré en figure 2b, ces moyens de fixation 202 sont disposés de façon judicieuse, par exemple en quinconce, de façon à ce qu'ils n'entrent pas en contact lorsque les deux parties 21 et 22 sont repliées l'une sur l'autre.

Par ailleurs, il est également possible de prévoir des légers creux dans chacune des parties 21 et 22, en regard des points de gel adhésif lorsque les parties sont repliées l'une sur l'autre, de façon à assurer une meilleure fermeture du dispositif support et un gain de place en position fermée.

Ce premier mode de réalisation permet donc de répondre à un besoin de stockage du dispositif support lorsqu'il n'est pas utilisé, et ce sans en altérer les performances, donc en protégeant les parties recouvertes de gel adhésif.

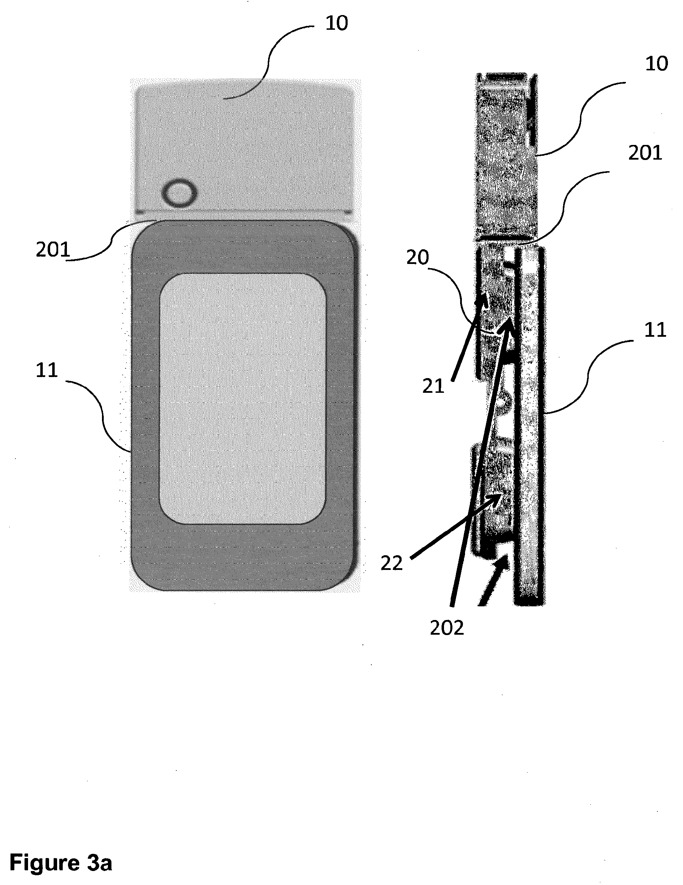

La figure 3a illustre quant à elle un assemblage, via le dispositif support selon ce premier mode de réalisation de l'invention, d'un module lecteur 10 à un terminal de communication 11 (en l'occurrence un smartphone).

La partie gauche de cette figure 3a présente cet assemblage de face, et on peut voir que la glissière 201 faisant office de moyens de maintien du module lecteur 10 est positionnée juste à la frontière entre le module lecteur 10 et le terminal de communication 11.

Sur la partie droite de cette même figure, on peut voir que les deux parties 21 et 22 du dispositif support 20 sont fixées au dos du terminal de communication 11, via les différents moyens de fixation 202, de manière à ce que le module lecteur 10 se trouve positionné juste en haut du terminal de communication 11.

Dans cette position de fixation, les deux parties 21 et 22 du dispositif support 20 sont « alignées » et forment une face de fixation plane au dos du terminal de communication 10. Il est également possible, grâce à l'articulation des deux parties 21 et 22, qu'elles ne soient pas tout à fait alignées pour s'adapter à la surface arrière du terminal de communication, par exemple une tablette dont la face arrière n'est pas tout à fait plane.

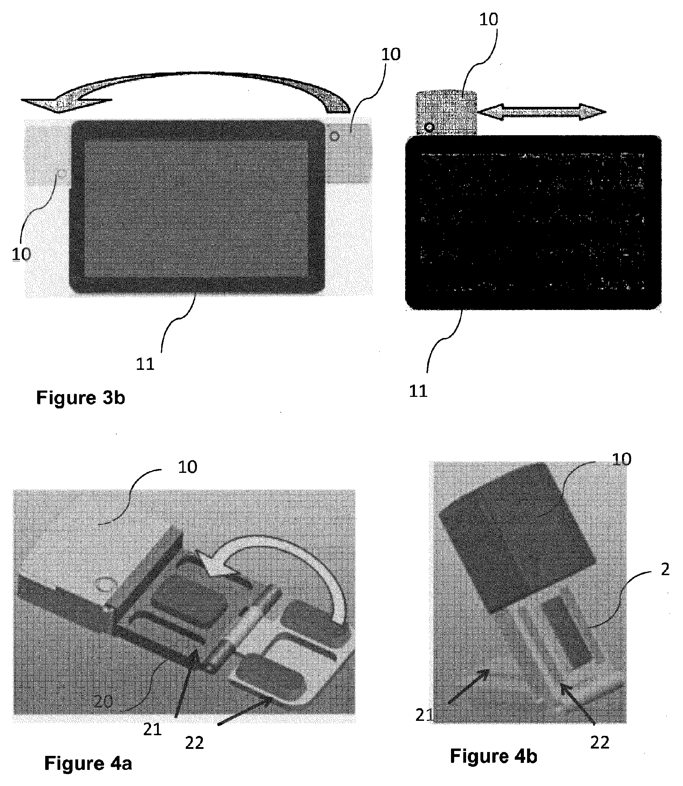

La figure 3b illustrent plusieurs assemblages différents, via le dispositif support selon ce premier mode de réalisation de l'invention, d'un module lecteur 10 à un terminal de communication 11 (en l'occurrence une tablette). On peut ainsi noter que le dispositif support, fixé au dos de la tablette, permet de disposer le module lecteur 10 sur un des côtés de la tablette 11 (partie gauche de la figure 3b) ou en haut (ou en bas, non illustré) de la tablette 11, à n'importe quel endroit.

Les figures 4a et 4b illustrent deux exemples de positions pouvant être prises par le dispositif support, lorsqu'il n'est pas utilisé pour fixer mécaniquement un module lecteur à un terminal de communication.

Par exemple, la figure 4a illustre la possibilité de refermer le dispositif support 20, en repliant la partie 22 sur la partie 21. On notera que le module lecteur 10 peut toujours être maintenu par le dispositif support 20, même dans cette position d'inutilisation.

Comme déjà décrit ci-dessus, les parties recouvertes de gel adhésives sont judicieusement placées en quinconce, de manière à ne pas entrer en contact dans la position fermée, et des creux sont prévus sur chacune des parties 21 et 22, en regard des points de gel adhésif.

Sur la figure 4b, le dispositif support 20 se trouve dans une position de stockage, ou de présentation, du module lecteur 10.

Dans cette position en effet, la partie 21 du dispositif support est fixée à un bureau, une table, un comptoir de commerçant, ou tout autre support, alors que la partie 22 est repliée de telle façon que le module lecteur 10 est accessible et toujours maintenu par le dispositif support 20. Cette position permet ainsi par exemple à un commerçant de stocker le module support à portée de main, lorsqu'il est inutilisé, de façon à pouvoir y accéder rapidement pour le fixer directement à un terminal de communication lorsqu'il en a besoin.

Cette position permet également une utilisation du module lecteur, lequel peut communiquer par une liaison sans fil avec le terminal de communication (par exemple la caisse du commerçant). Cette position de présentation laisse la liberté au commerçant de placer le module lecteur à l'endroit qu'il estime le plus judicieux sur son comptoir, par exemple pour faciliter les opérations de lecture des cartes.

La figure 5 illustre plus précisément comment retirer le module lecteur 10 du dispositif support 20, lorsque, comme dans ce premier mode de réalisation, les moyens de maintien se présente sous la forme d'une glissière 50.

Il est à noter que, selon ce mode de réalisation, le module lecteur doit être pourvu de moyens destinés à s'insérer dans cette glissière.

Selon une autre variante, non illustrée, le module lecteur peut être lui-même équipée d'une glissière, et le dispositif support présente une partie spécifique permettant de s'insérer dans la glissière du module lecteur.

### 6.3 Deuxième mode de réalisation

Selon un deuxième mode de réalisation particulier de l'invention, illustré en figure 6, les moyens de maintien du module lecteur 10 et les moyens de fixation du dispositif support 20 sont des moyens similaires. Ainsi, les moyens de maintien du module lecteur sont également mis en oeuvre par du gel adhésif, sur une des deux parties articulées formant le module lecteur.

Par exemple, une surface 61 recouverte de gel adhésif est prévue, sur la partie 21, pour recevoir et maintenir le module lecteur 10, alors que deux surfaces 62 sont prévues, sur la partie 22, pour assurer la fixation du dispositif support 20 au dos d'un terminal de communication 11.

Ce deuxième mode de réalisation permet l'utilisation d'un module ne nécessitant pas de moyens de maintien lui-même, contrairement au premier mode de réalisation particulier de l'invention dans lequel le module lecteur doit être pourvu de moyens permettant son insertion dans une glissière par exemple.

Selon ce deuxième mode de réalisation particulier, il est également possible de refermer le dispositif support, ainsi que d'utiliser le dispositif support pour stocker le module lecteur dans une position de stockage.

### 6.4 Communication entre le module lecteur et le terminal de communication

Il est à noter que l'invention, selon ses différents modes de réalisation particuliers, concerne la connexion mécanique entre un module de communication, par exemple un module lecteur de carte, et un terminal de communication, la connexion permettant la communication entre ces deux produits pouvant être mises en oeuvre de différentes manières.

Selon un premier mode de réalisation, une connexion sans fil est utilisée, par exemple via une liaison Bluetooth. En effet, les terminaux de communication actuels sont tous équipés de ce mode de communication avec des périphériques externes, tels que des oreillettes ou casques audio, des imprimantes, ou encore des modules lecteurs de carte. Une liaison sans fil Bluetooth est préférée à une liaison Wifi pour ce type d'équipement en raison de sa faible consommation, mais une liaison Wifi pourrait tout autant être utilisée entre le module lecteur et le terminal.

Une telle connexion sans fil permet d'utiliser de manière optimale le dispositif support selon l'un quelconques de modes de réalisation particuliers de l'invention, sans aucune contrainte de positionnement du module lecteur par rapport au terminal car aucune contrainte liée à de la connectique n'est imposée.

Selon un deuxième mode de réalisation, une connexion filaire est utilisée, par exemple de type USB. Dans ce cas, le module lecteur est relié par un petit câble à la prise USB du terminal de communication, ce qui est d'autant facilité par l'invention qui permet de positionner le module lecteur à sa convenance sur le terminal.

## Revendications

1. **Dispositif** support (20) d'au moins un module de communication (10), le dispositif support comprenant :
• des moyens de maintien (201,61), de manière amovible, sur ledit dispositif support, dudit module de communication (10) destiné à communiquer avec un terminal de communication (11) ;
• des moyens de fixation (202,62), de manière repositionnable, dudit dispositif support (20) audit terminal de communication
et **caractérisé en ce que** ledit dispositif support (20) est composé d'au moins deux parties articulées (21,22), au moins une desdites parties articulées présentant lesdits moyens de fixation, permettant audit dispositif support de prendre au moins les positions suivantes :
• position de fixation, dans laquelle les deux parties articulées sont aptes à fixer ledit dispositif support audit terminal de communication ;
• position d'inutilisation, dans laquelle les deux parties articulées sont repliées l'une sur l'autre ;
• position de présentation dudit module de communication, dans laquelle les deux parties articulées forment un angle aigu.

2. **Dispositif** support selon la revendication 1, **caractérisé en ce que** lesdits moyens de fixation (202,62) sont mis en oeuvre par du gel adhésif sur au moins une portion d'une face dudit dispositif support.

3. **Dispositif** support selon la revendication 1, **caractérisé en ce que** lesdites parties articulées (21,22) présentent chacune des moyens de fixation, disposés en quinconce, de manière à ne pas entrer en contact dans ladite position d'inutilisation.

4. **Dispositif** support selon la revendication 1, **caractérisé en ce que** lesdits moyens de maintien (201) dudit module de communication présentent une forme de glissière (50) permettant l'insertion et le retrait dudit module de communication (10) dudit dispositif support par glissement dudit module relativement audit dispositif support.

5. **Dispositif** support selon la revendication 1, **caractérisé en ce que** lesdits moyens de maintien (61) dudit module de communication sont mis en oeuvre selon la même forme que les moyens de fixation (62) dudit dispositif support.

## Patentansprüche

1. Unterstützungsvorrichtung (20) für mindestens ein Kommunikationsmodul (10), wobei die Unterstützungsvorrichtung umfasst:
- Mittel (201, 61) zum lösbaren Halten des Kommunikationsmoduls (10), das dazu bestimmt ist, mit einem Kommunikationsterminal (11) zu kommunizieren, auf der Unterstützungsvorrichtung;
- Mittel (202, 62) zur wiederpositionierbaren Befestigung der Unterstützungsvorrichtung (20) am Kommunikationsterminal
und **dadurch gekennzeichnet, dass** die Unterstützungsvorrichtung (20) von mindestens zwei gelenkigen Teilen (21, 22) gebildet ist, wobei es mindestens einer der gelenkigen Teile, der die Befestigungsmittel aufweist, der Unterstützungsvorrichtung ermöglicht, mindestens die folgenden Positionen einzunehmen:
- Befestigungsposition, in der die beiden gelenkigen Teile geeignet sind, die Unterstützungsvorrichtung am Kommunikationsterminal zu befestigen;
- Außerbetriebsposition, in der die beiden gelenkigen Teile aufeinander geklappt sind;
- Präsentationsposition des Kommunikationsmoduls, in der die beiden gelenkigen Teile einen spitzen Winkel bilden.

2. Unterstützungsvorrichtung nach Anspruch 1, **dadurch gekennzeichnet, dass** die Befestigungsmittel (202, 62) durch ein Haftgel auf mindestens einem Abschnitt einer Seite der Unterstützungsvorrichtung eingesetzt werden.

3. Unterstützungsvorrichtung nach Anspruch 1, **dadurch gekennzeichnet, dass** die gelenkigen Teile (21, 22) jeweils Befestigungsmittel aufweisen, die zickzack angeordnet sind, um in der Außerbetriebsposition nicht in Kontakt zu kommen.

4. Unterstützungsvorrichtung nach Anspruch 1, **dadurch gekennzeichnet, dass** die Haltemittel (201) des Kommunikationsmoduls eine Form einer Gleitschiene (50) aufweisen, die das Einsetzen und Entnehmen des Kommunikationsmoduls (10) aus der Unterstützungsvorrichtung durch Gleiten des Moduls in Bezug auf die Unterstützungsvorrichtung ermöglicht.

5. Unterstützungsvorrichtung nach Anspruch 1, **dadurch gekennzeichnet, dass** die Haltemittel (61) des Kommunikationsmoduls nach derselben Form wie die Befestigungsmittel (62) der Unterstützungsvorrichtung eingesetzt werden.

## Claims

1. A support **device** (20) of at least one communication module (10), the support device including:
• means for holding (201, 61), which are removable, to said support device, said communication module (10), intended to communicate with a communication terminal (11);
• fixing means (202, 62), which are repositionable, from the said support device (20) to the said communication terminal
and **characterised in that** said support device (20) is composed of at least two hinged parts (21, 22), at least one of said hinged parts having said fixing means, enabling said support device to take at least the following positions:
• a fixing position, wherein the two hinged parts are able to fix said support device to said communication terminal;
• a position of non-use, wherein the two hinged parts are folded one on the other;
• a presentation position of said communication module, wherein the two hinged parts form an acute angle.

2. The support **device** according to Claim 1, **characterised in that** said fixing means (202, 62) are implemented by adhesive gel on at least one portion of one face of said support device.

3. The support **device** according to Claim 1, **characterised in that** the said hinged parts (21, 22) each have fixing means, in staggered file, in a way to not come into contact in the said position of non-use.

4. The support **device** according to Claim 1, **characterised in that** said means for holding (201) said communication module have a slider form (50), enabling the insertion and removal of said communication module (10), from said support device by sliding from said module relative said support device.

5. The support **device** according to Claim 1, **characterised in that** said means for holding (61) said communication module are implemented according to the same form as the fixing means (62) of said support device.
